# EUROPÄISCHE PATENTANMELDUNG

(11) **EP 1 377 090 A1**
(43) Veröffentlichungstag der Anmeldung: **02.01.2004**
(21) Anmeldenummer: 03013903.4
(22) Anmeldetag: 20.06.2003
(51) Int. Cl.: H04Q 7/24

(54) **Verfahren zum Anmelden eines drahtlosen Endgerätes bei einem Vermittlungssystem eines Funksystems sowie Vorrichtung mit einer Kontroll-Applikation**

(30) Priorität: 28.06.2002 DE 10229165
(71) Anmelder: Tenovis GmbH & Co. KG, 60326 Frankfurt am Main (DE)
(72) Erfinder: Krantzik, Andras, Dr., 64404 Bickenbach (DE)
(74) Vertreter: Patentanwaltskanzlei WILHELM & BECK

(57) **Zusammenfassung**

Erfindungsgemäß wird ein Verfahren beziehungsweise eine Vorrichtung mit einer Kontroll-Applikation zum Anmelden eines drahtlosen Endgerätes (1) bei einem Vermittlungssystem (3) vorgeschlagen, das mit einer Basisstation (2) eines Funksystems (A) in Verbindung steht. Dabei wird bei einem neuen Funkkontakt des drahtlosen Endgerätes (1) mit einer der Basisstationen (2) des Funksystems (A,B) ein Erkennungssignal für den neuen Funkkontakt an die Vorrichtung mit der Kontroll-Applikation (4) gesendet. Das Erkennungssignal wird von der Kontroll-Applikation (4) mit Anmeldedaten automatisch verknüpft und zur Durchführung einer Anmeldung an ein zugeordnetes Vermittlungssystem (3) gesendet. Dabei werden wenigstens eine Leitungs-Adresse oder eine Netzwerk-Kennung (8) gespeichert, unter der das drahtlose Endgerät (1) erreichbar ist.

## Beschreibung

Verfahren zum Anmelden eines drahtlosen Endgerätes bei einem Vermittlungssystem eines Funksystems sowie Vorrichtung mit einer Kontroll-Applikation

Die Erfindung geht aus von einem Verfahren zum Anmelden eines drahtlosen Endgerätes bei einem Vermittlungssystem, das mit einer Basisstation eines Funksystems in Verbindung steht, wobei ein neuer Funkkontakt zwischen dem drahtlosen Endgerät und der Basisstation erkannt und ein entsprechendes Erkennungssignal an eine Kontroll-Applikation gesendet wird, beziehungsweise von einer Vorrichtung mit einer Kontroll-Applikation nach der Gattung der nebengeordneten Ansprüche 1 und 9. Es ist schon bekannt, dass bei Vermittlungssystemen wie Telekommunikationsanlagen (TK-Anlagen), Gatekeepern, Softswitches oder Centrex-Systeme in der Regel die Möglichkeit besteht, dass ein drahtloses Endgerät (Handy oder funkbetriebenes Datengerät) über eine entsprechende Basisstation des Funksystems oder -netzes angemeldet werden kann. Dabei können Funktechnologien wie DECT (Digital Enhanced Cordless Telecommunication), Bluetooth oder WLAN (Wireless Local Area Network) zum Einsatz kommen. In der Praxis ergibt sich dabei die Möglichkeit, dass das drahtlose Endgerät in Abhängigkeit von seinem momentanen Standort über die nächstliegende Basisstation des Funksystems angemeldet werden kann. Bei diesem als Roaming bezeichneten Verfahren ist das drahtlose Endgerät praktisch überall erreichbar. Bedingung ist allerdings, dass beim Einschalten oder der Kontaktaufnahme des drahtlosen Endgerätes mit einer Basisstation eine vorgegebene Anmeldeprozedur beim zugeordneten Vermittlungssystem des Funknetzes durchgeführt wird.

Es ist weiter bekannt, dass bei Systemen wie Tk-Anlagen oder Gatekeepern sich ein Benutzer mit seiner persönlichen Kennung, zum Beispiel mit seiner PIN-Nummer (Personal Identity Number) bei einem (drahtgebundenen) Endgerät anmelden kann.

Der Benutzer ist daher in der Lage, beispielsweise bei einem Unternehmen, das ein größeres Festnetz an verschiedenen Standorten unterhält, sich mit seiner Benutzer-Kennung an jedem beliebigen Endgerät anzumelden, ähnlich, wie es heute auch schon bei einer Computer-Anmeldung durchgeführt werden kann (User Mobility). Bei der Anmeldeprozedur muss zum Beispiel bei leitungsvermittelnden oder paketvermittelnden Techniken jedoch festgehalten werden, über welche Leitung oder Netzwerkadresse ein Benutzer erreichbar ist. Ein solches Anmeldeverfahren ist beispielsweise für die paketvermittelnde Sprachübertragung über das Internet (Voice over IP) aus dem RAS-Protokoll innerhalb des ITU-T H.323-Standards bekannt. Ungünstig ist jedoch, dass bisher dieses Anmeldeverfahren nur bei drahtgebundenen Endgeräten Anwendung findet, nicht aber bei drahtlosen Endgeräten.

Bei Funknetzen mit den zur Sprachübermittlung genutzten Standards kann bekanntermaßen eine Anmeldung dadurch eingeleitet werden, dass ein neuer Funkkontakt zwischen dem drahtlosen Endgerät und der Basisstation erkannt und über dem in den Sende-/Empfangsgeräten implementierten Protokoll-Stapel an eine übergeordnete Kontroll-Applikation gesendet wird. Dieses Anmeldeverfahren ist relativ aufwändig und kann nicht ohne weiteres für alle verwendeten Funkstandards verwendet werden.

Das erfindungsgemäße Verfahren zur Anmeldung eines drahtlosen Endgerätes bei einem Vermittlungssystem beziehungsweise die Vorrichtung mit einer Kontroll-Applikation mit den kennzeichnenden Merkmalen der nebengeordneten Ansprüche 1 und 9 hat demgegenüber den Vorteil, dass die Kontroll-Applikation das Erkennungssignal für einen Funkkontakt zusammen mit den Anmeldedaten wie Benutzer-Kennung, Geräte-Kennung, Leitungspfad oder ähnliches, verknüpft und das verknüpfte Signal zur vereinfachten automatischen Anmeldung an das zuständige Vermittlungssystem sendet. Als besonders vorteilhaft wird dabei angesehen, dass das Vermittlungssystem die Anmeldung eines drahtlosen Endgerätes über das Funknetz genau so behandeln kann wie beispielsweise ein drahtgebundenes Telefonendgerät. Aus Sicht des Vermittlungssystems verhält sich also das drahtlose Endgerät, das über das Funksystem angemeldet ist, genau so wie ein drahtgebundenes Telefonendgerät.

Durch die in den abhängigen Ansprüchen aufgeführten Maßnahmen sind vorteilhafte Weiterbildungen und Verbesserungen des in den nebengeordneten Ansprüche 1 und 9 angegebenen Verfahrens beziehungsweise der Vorrichtung gegeben. Als besonders vorteilhaft wird angesehen, dass beim Wechsel des drahtlosen Endgerätes zu einem weiteren Funksystem mit gleicher Funktionalität des gleichen Vermittlungssystems automatisch eine neue Anmeldung im Vermittlungssystem erfolgt. Bei diesem Verfahren kann sich das drahtlose Endgerät auch in anderen Funksystemen anmelden, die im Verbund zusammengeschaltet sind. Dadurch ergeben sich weitreichende Vorteile bei der Nutzung des gleichen drahtlosen Endgerätes. Denn ein spezielles drahtloses Endgerät für das weitere Funksystem ist nicht erforderlich.

Eine einfache Anmeldeprozedur für das drahtlose Endgerät kann dadurch erreicht werden, dass bei einer neuen Anmeldung lediglich die geänderte Leitungskennung oder Netzwerksadressen aktualisiert wird. Diese vereinfachte Anmeldeprozedur führt zu einer universellen Nutzung des drahtlosen Endgerätes und einer schnelleren Anmeldung im neuen Funksystem. Das gibt dem Nutzer weitreichende Bewegungsfreiheiten, wobei die Vorteile von günstigen Tarifen beispielsweise in Corporate Netzwerken voll genutzt werden können.

Insbesondere paketvermittelnde Techniken, wie sie bei der Internet-Telephonie (Voice over IP) genutzt werden, stellen eine einfache und flexible Möglichkeit dar, das Vermittlungssystem mit den Basisstationen der Funksysteme zu verbinden.

Die Zusammenschaltung mehrerer Funksysteme erfolgt vorteilhaft über Standard-Interfaces, die sich für drahtgebundene Endgeräte vielfach bewährt haben. Ein solches Standard-Interface arbeitet beispielsweise nach dem per se bekannten H.323 Standard und kann eine Verbindung zwischen den Funksystemen und dem Vermittlungssystem oder einen Verbund von Vermittlungssystemen herstellen.

Günstig erscheint auch die Lösung, dass im Funksystem, dass heißt in dessen einzelnen Basisstationen und/oder der Kontroll-Applikation eine Zuordnungstabelle gehalten wird. Die Zuordnungstabelle enthält wichtige Informationen wie eine Benutzer-Kennung und Terminal-Kennung, durch die eine eindeutige Zuordnung zum drahtlosen Endgerät und seinem Benutzer ermöglicht wird. Diese Informationen sind beispielsweise für die Erreichbarkeit oder Kostenabrechnungen sehr wichtig.

Eine vorteilhafte Lösung wird auch darin gesehen, als Benutzer-Kennung eine Telefonnummer abzuspeichern, unter der ein bestimmter Benutzer erreichbar ist. Ergänzend kann eine Terminal-Kennung gespeichert werden, die beispielsweise eine HW-Adresse (Hardware-Adresse) beinhaltet.

Werden die Kennungen in jedem Funksystem gespeichert, dann kann das drahtlose Endgerät natürlich überall einfach und schnell angemeldet werden, was insbesondere beim Roaming vorteilhaft ist.

Die Übermittlung der Kennungen an die einzelnen Funksysteme erfolgt vorteilhaft mit einem als Softwareprogramm ausgebildeten Administrationstool. Solche Softwaretools lassen sich nicht nur leicht erstellen, sondern können auch sehr einfach an neue Verhältnisse angepasst werden, insbesondere, wenn die Funksysteme ausgebaut oder verändert werden sollen.

Günstig erscheint auch, die Kennungen während des Aufbaus der Funkverbindung zwischen dem drahtlosen Endgerät und der Basisstation zu übermitteln. Dieses kann vorteilhaft im Rahmen der Anmeldeprozedur erfolgen.

Bei der Vorrichtung mit der Kontroll-Applikation kann vorteilhaft die Zuordnungstabelle in einem Speicher der Vorrichtung abgelegt sein. Der Speicher wird ohnehin für das Softwareprogramm der Kontroll-Applikation benötigt, so dass hier auch noch die Zuordnungstabelle abgelegt werden kann. Ein Zusätzlicher Speicher für die Zuordnungstabelle ist dann nicht erforderlich.

Der Erfindung liegt die Aufgabe zu Grunde, die Anmeldeprozedur für ein drahtloses Endgerät bei einem Vermittlungssystem unabhängig vom verwendeten Funkssystem zu vereinfachen. Diese Aufgabe wird mit den Merkmalen der nebengeordneten Ansprüche 1 und 9 gelöst.

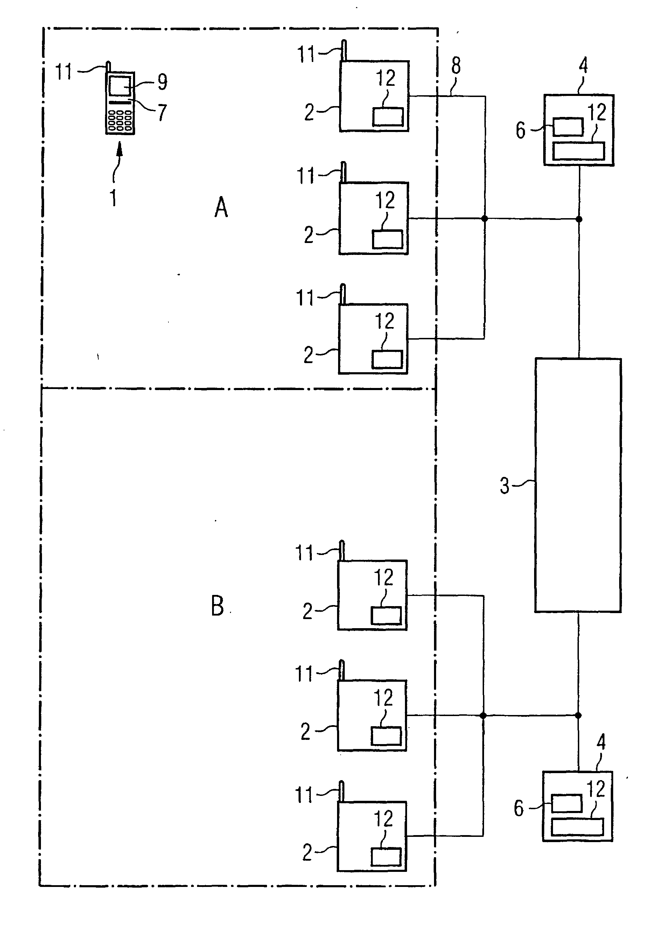

Ein Ausführungsbeispiel der Erfindung ist in der Zeichnung dargestellt und wird in der nachfolgenden Beschreibung näher erläutert.

Die Figur zeigt in schematischer Darstellung beispielhaft die Anordnung von zwei Funksystemen, bei denen sich ein drahtloses Endgerät anmelden kann.

Das Ausführungsbeispiel der Figur ist schematisch und sehr vereinfacht dargestellt und gibt nur das Umfeld an, in dem die Erfindung Anwendung findet. Es zeigt zwei begrenzte Funksysteme oder Funknetze A,B, deren Reichweiten durch die gestrichelt dargestellten Linien begrenzt sein sollen. In der Praxis können sich die Reichweiten der Funknetze naturgemäß überschneiden, dies ist aber für die Erfindung nicht relevant.

Die Funksysteme A,B arbeiten nach einem der bekannten Standards wie DECT, Bluetooth, WLAN oder dergleichen. Jedes Funknetz A,B weist eine beliebige Anzahl von Basisstationen 2 auf, die ein multi-zellulares Funknetz bilden, das von einer Steuerinstanz kontrolliert wird.

Aus Übersichtlichkeitsgründen sind in der Figur nur drei Basisstationen 2 dargestellt, die mit einem Vermittlungssystem 3 über drahtgebundene Leitungen oder auch drahtlos in Verbindung stehen. Jedes Funknetz A,B kann alternativ sein eigenes Vermittlungssystem 3 aufweisen oder, wie in der Figur dargestellt ist, von einem gemeinsamen Vermittlungssystem 3 gesteuert werden. Die Basisstationen 2 sind mit den üblichen Einrichtungen wie Sende-/Empfangseinrichtungen, einer Antenne 11, Steuereinrichtungen, Speicher usw. ausgebildet. Des weiteren weisen die Basisstationen 3 eine Einrichtung auf, mit der ein neuer Funkkontakt zu dem drahtlosen Endgerät 1 erkannt werden kann. Wird beispielsweise das drahtlose Endgerät 1, das in der Figur als Handy dargestellt ist und sich im Funkfeld des Funknetzes A befindet, neu eingeschaltet, dann wird dieser neue Funkkontakt von der in der Regel nächstliegenden Basisstation 2 erkannt und ein entsprechendes Erkennungssignal an eine Kontroll-Applikation 4 gesendet, die mit den Basisstationen über ein drahtgebundenes oder ein drahtlosen Netz in Verbindung steht. Die einzelnen Verbindungsleitungen können entsprechende Leitungs-Kennungen 8 aufweisen, so dass auf diesem Wege der Pfad zum drahtlosen Endgerät 1 nachvollziehbar wird.

Die Anbindung zwischen den Funksystemen A,B und dem Vermittlungssystem 3 kann mit leitungsvermittelnden oder auch mit paketvermittelnden Techniken durchgeführt werden. Insbesondere ist vorgesehen, beispielsweise für die Sprachübertragung auch die paketvermittelnden Techniken des Internets zu nutzen (Voice over IP). Es wird vorgeschlagen, die Funksysteme A,B über ein Standard-Interface, beispielsweise nach dem H. 323 Protokoll, an das Vermittlungssystem 3 oder einen Verbund von Vermittlungssystemen anzuschließen. Über diesen Schnittstellentyp unterstützt das Vermittlungssystem 3 eine Anmeldeprozedur für das drahtlose Endgerät 1, mit der u.a. auch User Mobility ermöglicht wird. Bei einem Verbund von Vermittlungssystemen wird die User Mobility entsprechend übergreifend geregelt.

Es ist weiter vorgesehen, dass in der Vorrichtung mit der Kontroll-Applikation 4 und/oder im Funksystem A,B, das heißt in wenigstens einer der Basisstationen 2 eine Zuordnungstabelle 12 gespeichert ist, in die die aktuell angemeldeten drahtlosen Endgeräte 1 eingetragen sind.

Das drahtlose Endgerät 1 ist per se bekannt und weist entsprechende Einrichtungen wie eine Sende-/Empfangseinrichtung mit einer Antenne 11, einen Speicher, eine Tastatur, eine Anzeigeeinrichtung 9 usw. auf. Als wesentliches Merkmal hat das drahtlose Endgerät 1 einen Speicher, in dem eine Terminal-Kennung (Terminal-Identifikator) 7 abgelegt ist, die auch als HW-Adresse (Hardware-Adresse) bezeichnet wird. Das drahtlose Endgerät 1 kann ein Handy für die Sprachübertragung oder ein beliebiges Datengerät sein, das mit dem entsprechenden Funksystem A,B Kontakt aufnehmen kann.

Das Vermittlungssystem 3 kann eine TK-Anlage (Telekommunikations-Anlage), ein Gatekeeper, Softswitch, Centrex-System oder dergleichen sein. Solche Anlagen werden für die Steuerung und Vermittlung von Gesprächs- und Datenübertragungen in privaten oder öffentlichen Telekommunikationsnetzen verwendet und sind per se bekannt. Insbesondere bietet das Vermittlungssystem 3 auch die Möglichkeit, mit funkbetriebenen Basisstationen 2 zu kommunizieren und somit auch drahtlose Endgeräte 1 anzuschließen beziehungsweise anzumelden.

Die Vorrichtung mit der Kontroll-Applikation 4 weist u.a. ein Softwareprogramm auf, das in einem entsprechenden Speicher abgelegt ist. Die Vorrichtung 4 kann dabei als Teil des Funksystems A,B oder auch als selbständige Einheit ausgebildet sein. Sie ist in diesem Fall universell einsetzbar und unterstützt das Anmeldeverfahren für das drahtlose Endgerät 1, das in dem Funksystem A,B eingeschaltet wird oder in dessen Reichweite gelangt.

Im Folgenden wird die Funktionsweise näher erläutert. Beispielsweise beim Einschalten des drahtlosen Endgerätes 1 registriert die entsprechende Basisstation 2 den neuen Funkkontakt mit dem drahtlosen Endgerät 1 und sendet ein entsprechendes Erkennungssignal an die Kontroll-Applikation 4. Die Kontroll-Applikation 4 verknüpft dieses Erkennungssignal mit entsprechenden Anmeldedaten wie einer Leitungs-Kennung oder einer Netzwerkadresse 8 und führt bei dem Vermittlungssystem 3 eine entsprechende Anmeldeprozedur für das drahtlose Endgerät 1 durch. In dem Vermittlungssystem wird dann die Leitungs-Kennung oder die Netzwerks-Adresse 8 gespeichert, über die das Funksystem A,B erreichbar ist.

Sobald der Benutzer mit seinem drahtlosen Endgerät 1 den Funkbereich eines weiteren Funksystems B mit gleicher Funktionalität erreicht, das am gleichen Vermittlungssystem 3 angeschlossen ist, erfolgt automatisch wieder eine neue Anmeldung für das drahtlose Endgerät 1 am Vermittlungssystem 3. Die Daten der Erreichbarkeit werden im Vermittlungssystem aktualisiert und nun die neue Leitungs-Kennung oder Netzwerk-Adresse 8 gespeichert. Die nicht mehr benötigten Daten werden gelöscht.

Die Verknüpfung der Netzeintrittsereignisse mit den Anmeldedaten für die Anmeldeprozedur kann somit genutzt werden, um durch Nutzung der User Mobility im Vermittlungssystem 3 auch die Roaming-Funktionalität zu nutzen.

Im Funksystem A,B beziehungsweise in der Kontroll-Applikation 4 wird die Zuordnungstabelle 12 gehalten, die für jeden Benutzer eines drahtlosen Endgerätes 1 eine eindeutige Zuordnung zwischen seiner Benutzer-Kennung 6, beispielsweise seiner Telefonnummer und einer Terminal-Kennung 7 (HW-Adresse, Hardware-Adresse) enthält. Dieses Datenpaar ist vorzugsweise in jedem Funksystem A,B gespeichert, über das der Benutzer erreichbar sein will.

Das Datenpaar (Benutzer-Kennung 6 und Terminal-Kennung 7) kann über ein Administrationstool oder alternativ beim Aufbau der Funkverbindung den Funksystemen A,B übermittelt werden.

Für die Roaming-Funktionalität der Funksysteme A,B erfolgt jeder Neuaufbau der Funkverbindung zum drahtlosen Endgerät 1 durch Ermittlung der Terminal-Kennung 7 und der Benutzer-Kennung 6, die der Zuordnungstabelle entnehmbar sind. Mit dieser Benutzer-Kennung 6 wird eine Anmeldung an das Vermittlungssystem 3 gesendet. Bei paketvermittelnden Netzen wird auch die Netzwerkadresse zum Funksystem A,B hinzugefügt.

Im Vermittlungssystem 3 wird darauf hin bei leitungsvermittelnden Systemen die Leitung identifiziert und gespeichert, über die die Anmeldung erfolgt ist. An Hand der Leitungs-Kennung 8 kann der Benutzer zukünftig erreicht werden.

Bei paketvermittelnden Systemen wird dagegen die entsprechende Netzwerk-Adresse 8 gespeichert und künftig zum Verbindungsaufbau zum Benutzer verwendet. Die Daten werden vorzugsweise unter Berücksichtigung von Datum und Uhrzeit gespeichert. Alte Daten werden gelöscht.

Wird die Anmeldeprozedur in den Basisstationen 2 implementiert, die direkt mit dem Vermittlungssystem 3 mit der Funktionalität User Mobility verbunden sind, ergibt sich die Roaming -Funktionalität zwischen Basisstationen 2, ohne das Vermittlungssystem 3 funktional erweitern zu müssen. Beispielsweise können auf diese Weise einzelne Arbeitsplätze oder Heimarbeitsplätze mit einem drahtlosen Endgerät 1 vorteilhaft ausgestattet sein.

Sind mehrere Funksysteme mit der oben beschriebenen Ausgestaltung an verschiedenen Standorten im Einsatz, kann netzwerkweites Roaming erreicht werden. Beispielsweise kann ein sprachvermittelndes Firmennetzwerk (Corporate Network) für mehrere Standorte, realisiert durch ein einziges oder einen Verbund von Vermittlungssystemen, mit je einem Funknetz pro Standort ausgestattet werden. Somit sind Mitarbeiter mit ihren drahtlosen Endgeräten 1 an allen Standorten erreichbar.

Sind mehrere Funksystem im Einsatz, die Funknetze mit unterschiedlichen Funktechnologien aufweisen, kann im Zusammenspiel mit mehreren drahtlosen Endgeräten 1, für die Einträge mit derselben Benutzer-Kennung 6 in den Zuordnungstabellen 12 vorhanden sind, oder solchen Endgeräten, die mehrere Funktechnologien verarbeiten können, auch Roaming mit unterschiedlichen Funktechnologien durchgeführt werden.

### Bezugszeichenliste

- 1: (mobiles) Endgerät
- 2: Basisstation
- 3: Vermittlungssystem
- 4: Kontroll-Applikation
- 5: Anmeldeprozedur
- 6: Benutzer-Kennung
- 7: Terminal-Kennung
- 8: Leitungs-Kennung oder Netzwerk-Adresse
- 9: Anzeigeeinrichtung
- 10: Anzeige
- 11: Antenne
- 12: Zuordnungstabelle
- A: Funksystem
- B: weiteres Funksystem

## Patentansprüche

1. Verfahren zum Anmelden eines drahtlosen Endgerätes (1) bei einem Vermittlungssystem (3), das mit einer Basisstation (2) eines Funksystems (A) in Verbindung steht, wobei ein neuer Funkkontakt zwischen dem drahtlosen Endgerät (1) und der Basisstation (2) erkannt und ein entsprechendes Erkennungssignal zusammen mit Anmeldedaten an eine Kontroll-Applikation (4) gesendet wird,
**dadurch gekennzeichnet,**
**dass** die Kontroll-Applikation (4) das Erkennungssignal mit den Anmeldedaten verknüpft und bei dem Vermittlungssystem (3) eine automatische Anmeldung für das drahtlose Endgerät (1) durchführt, wobei eine Netzwerk-Adresse (8) gespeichert wird, unter der das drahtlose Endgerät (1) erreichbar ist.

2. Verfahren nach Anspruch 1, **dadurch gekennzeichnet, dass** beim Wechsel des drahtlosen Endgerätes (1) zu einem weiteren Funksystem (B) mit gleicher Funktionalität des gleichen Vermittlungssystems (3) automatisch eine neue Anmeldung bei dem Vermittlungssystem (3) erfolgt.

3. Verfahren nach Anspruch 1 oder 2, **dadurch gekennzeichnet, dass** bei der neuen Anmeldung des drahtlosen Endgerätes (1) die Anmeldedaten durch Speicherung der Netzwerk-Adresse (8) aktualisiert werden.

4. Verfahren nach einem der vorhergehenden Ansprüche, **dadurch gekennzeichnet, dass** die Funksysteme (A,B) über ein Standard-Interface für drahtgebundene Endgeräte, vorzugsweise nach dem H.323 Standard an das Vermittlungssystem (3) oder einen Verbund von Vermittlungssystemen (3) verbunden sind.

5. Verfahren nach einem der vorhergehenden Ansprüche, **dadurch gekennzeichnet, dass** im Funksystem (A,B) und/oder der Kontroll-Applikation (4) eine Zuordnungstabelle (12) gehalten wird, die für jedes drahtlose Endgerät (1) eine eindeutige Zuordnung zwischen seiner Benutzer-Kennung (6) und einer eindeutigen Terminal-Kennung (7) seines drahtlosen Endgerätes (1) enthält.

6. Verfahren nach Anspruch 5, **dadurch gekennzeichnet, dass** als Benutzer-Kennung (6) eine Telefonnummer und/oder als Terminal-Kennung (7) eine HW-Adresse verwendbar ist.

7. Verfahren nach einem der Ansprüche 5 oder 6, **dadurch gekennzeichnet, dass** den einzelnen Funksystemen (A,B) die Kennungen (6,7,8) mittels eines Administrationstools übermittelt werden.

8. Verfahren nach einem der Ansprüche 5 oder 6, **dadurch gekennzeichnet, dass** die Kennungen (6,7) während des Aufbaus der Funkverbindung vom drahtlosen Endgerät (1) zum Funksystem (A,B) übermittelt werden.

9. Vorrichtung mit einer Kontroll-Applikation (4) für das Zusammenwirken eines Funksystems (A, B) mit einem Vermittlungssystem (3), wobei neben den Anmeldedaten jeder neue Funkkontakt zwischen einem drahtlosen Endgerät (1) und einer Basisstation (2) des Funksystems (A,B) an die Kontroll-Applikation gemeldet wird,
**dadurch gekennzeichnet,**
**dass** die Vorrichtung ausgebildet ist, bei einem neuen Funkkontakt die Anmeldedaten des drahtlosen Endgerätes (1) mit einem Erkennungssignal für den neuen Funkkontakt innerhalb der Kontroll-Applikation zu verknüpfen und die verknüpften Daten zur automatischen Anmeldung an das Vermittlungssystem (3) des Funksystems (A,B) zu übermitteln, und
**dass** eine Netzwerk-Adresse (8) speicherbar ist, unter der das drahtlose Endgerät (1) erreichbar ist.

10. Vorrichtung nach Anspruch 9, **dadurch gekennzeichnet, dass** eine Zuordnungstabelle (12) abgelegt ist, die eine eindeutige Zuordnung zwischen einer Benutzer-Kennung (6) und einer zugeordneten Terminal-Kennung (7) des drahtlosen Endgerätes (1) aufweist.
